# EUROPEAN PATENT SPECIFICATION

(11) **EP 3 484 797 B1**
(45) Date of publication and mention of the grant of the patent: **14.04.2021**
(21) Application number: 17746549.9
(22) Date of filing: 06.07.2017
(51) Int. Cl.: B65G 47/248, B65G 11/10

(54) **DEVICE FOR OVERTURNING CONTAINERS ALONG MOVEMENT LINES, PARTICULARLY FOR CANS**
VORRICHTUNG ZUM WENDEN VON BEHÄLTERN ENTLANG VON BEWEGUNGSLINIEN, INSBESONDERE FÜR DOSEN
DISPOSITIF POUR RETOURNER DES CONTENANTS SUIVANT DES LIGNES DE MOUVEMENT, DESTINÉ EN PARTICULIER À DES BOÎTES

(30) Priority: 12.07.2016 IT 201600072697
(43) Date of publication of application: 22.05.2019
(73) Proprietor: L.M.-S.p.A., 41122 Modena (MO) (IT)
(72) Inventor: MAGNONI, Cinzia, 41122 Modena (MO) (IT)
(74) Representative: Luppi, Emanuele
(86) International application number: PCT/IB2017/054080
(87) International publication number: WO 2018/011678

(56) References cited:
- DE-U1-202015 100 131
- JP-U- H0 422 412
- US-A- 3 785 473
- US-A1- 2008 203 109

## Description

### Technical Field

This invention relates to a device for overturning containers along movement lines, particularly for cans.

### Background Art

As is known, in bottling and packaging plants of containers for liquids, such as beverage cans or the like, the cans are made to advance along movement lines which usually consist of conveyor belts, air bearing guides, down ramps or the like.

Such movement lines allow displacing the cans in succession inside and outside of the machines provided in the plant for the performance of all the traditional operations related to the production of the finished product, such as e.g. molding, rinsing, filling, sealing and packaging.

Along the movement lines cans usually move vertically, with the top facing upwards.

For the execution of special operations, however, they have to be overturned and arranged with the top facing downwards.

This is the case, for example, of the movement lines mounted on so-called rinsing machines, in which the cans undergo a preliminary rinse treatment to clean their inner surface before the next filling operation.

The cans to be rinsed usually consist of a cylindrical body provided with a closed bottom and an open top, which will be sealed only after filling. Traditional rinsing machines consist of a tunnel chamber crossed by one or more movement lines.

Inside the tunnel chamber there is a sequence of dispensing nozzles which are arranged below the movement lines and directed upwards.

During use, the inside of the cans is sprinkled with water or other cleaning liquid delivered by the dispensing nozzles, which enters the cans through the open top facing downwards and which is subsequently drained by gravity.

In order to allow the link between this machine and the rest of the plant, a plurality of overturning ducts is usually provided at the inlet and outlet of the tunnel chamber which allow the cans to revolve around themselves and to place them with the open top facing downwards at the entrance and bring them back to the vertical position with the open top facing upwards at the outlet.

Such overturning ducts usually consist of a series of curved guiding rods assembled together so as to define a guiding duct inside which the containers slide to measure and which are shaped so as to define a helical route for the advancing cans.

Similar overturning ducts are also conveniently used upstream and downstream of machines other than rinsing machines, such as labeling / printing machines, intended to indicate the product identification codes onto the closed bottom of the can.

These traditional overturning ducts do have several drawbacks.

In this regard, it is emphasized that the manufacture of such overturning ducts can only be achieved through a long and laborious process which consists in the manual bending of the individual rods and their sealing onto connecting and supporting frames.

This machining is usually carried out by highly specialized and experienced personnel and cannot be industrialized, which results in a significant increase in overall production costs.

Moreover, it cannot be overlooked that each overturning duct is intended to be crossed by cans of a single specific format.

The movement lines having only one overturning duct therefore allow to move only one type of cans which, given the numerous and changing production needs, represents a strong limitation of use.

Movement lines therefore usually have several overturning ducts, one for each format of cans, with a consequent increase in production and plant management costs, which obviously affect the final sale price of products, risking of making them less attractive to customers.

It should also be remembered that such movement lines, although having several overturning ducts, have a rather limited flexibility of use in view of the fact that each overturning duct can only be used for one specific format and, therefore, cannot be used to dispose of any production peaks required for the other formats.

In order to at least partially overcome the aforementioned drawbacks, the patent document IT 1378647 proposes an overturning device having two helical guide elements arranged in series, between which a curved guide component is positioned.

Each helical guide element is made of a single monolithic body made of plastic or metal and is substantially solid, e.g. obtained by chip removal machining of a solid body, or by casting and/or molding inside a mold.

The helical guide elements are provided with an inner cavity for the transit of the cans, which extends longitudinally in a spiral pattern and is provided with guide ribs intended, during use, to come into contact with the lateral surface and with the bottom of cans.

The top of cans, on the other hand, is kept in position by means of a metal guide rod, which is associated with the helical guide elements and prevents the cans from coming out of the inner cavity.

In practice, the spiral route defined by the inner cavities of the helical guide elements and by the metal rod causes the rotation of the cans around themselves; in particular, the Italian patent IT 1378647 teaches to use a shaped helical guide element so as to cause a rotation of 90°, while the other helical guide element causes a rotation equal to 75°.

The cans, therefore, reach the mouth of the overturning device in a vertical position and with the top facing upwards and come out inclined by 15° with respect to the vertical direction and with the top facing downwards.

The helical guide elements, although they may be manufactured industrially in a more convenient manner than traditional overturning ducts, still suffer from the drawbacks arising from the fact that each of them is intended to be crossed by cans of only one specific format and is practically unusable when the plant is used for the movement of different formats.

In order to extend the field of application of the device also to different formats, patent document IT 1403976 discloses a device for overturning containers provided with a plurality of guide segments, suitably arranged and shaped so as to define a univocal advancement route and the transit to measure of a single container. In the present device adjustment means are also used which are adapted to adjust the distance between the guide segments according to the height of the containers.

Nevertheless, the solution offered by patent document IT 1403976 is likely to be further refined, with the aim to increase its flexibility of use in terms of diversification of the container formats.

Another type of device according to the preamble of claim 1 for overturning containers is disclosed in the patent document US 2008/203109.

### Description of the Invention

The main aim of the present invention is to obtain the aforementioned upgrading by providing a device for overturning containers along movement lines, particularly for cans, which is able to expand the range of different container formats.

Another object of the present invention is to be manufactured industrially by means of simple, easy and efficient to use manufacturing technologies and processes, so as to reduce the overall manufacturing costs.

The above mentioned objects are achieved by the present device for overturning containers along movement lines, particularly for cans, having the characteristics of claim 1.

### Brief Description of the Drawings

Other characteristics and advantages of the present invention will become more evident from the description of a preferred, but not exclusive, embodiment of a device for overturning containers along movement lines, particularly for cans, illustrated by way of an indicative, but non-limiting example in the accompanying drawings, wherein:
Figure 1 is a side elevation view of the device according to the invention arranged along a movement line for containers;

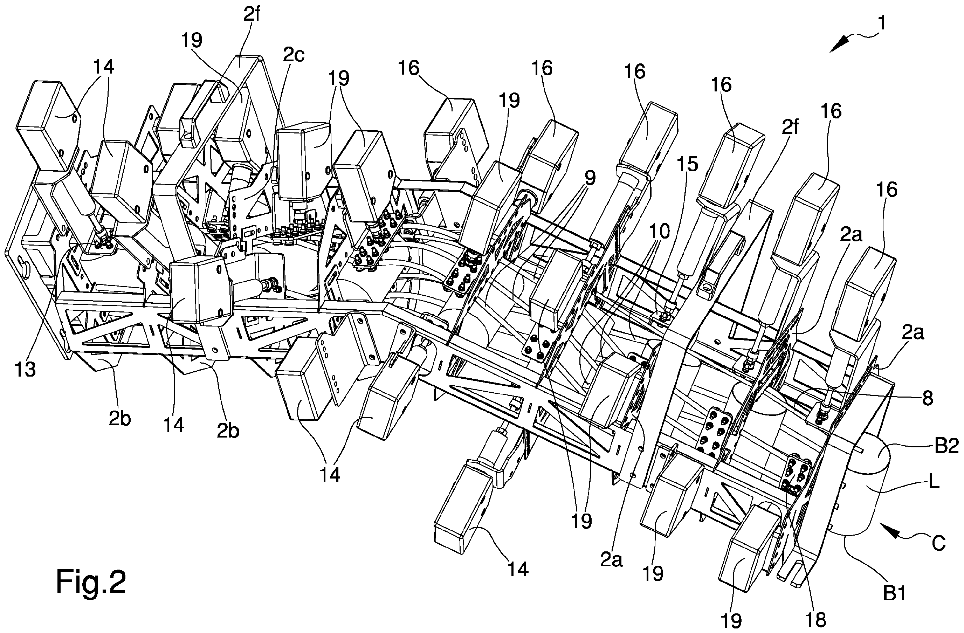

Figure 2 is an axonometric view of the device according to the invention;

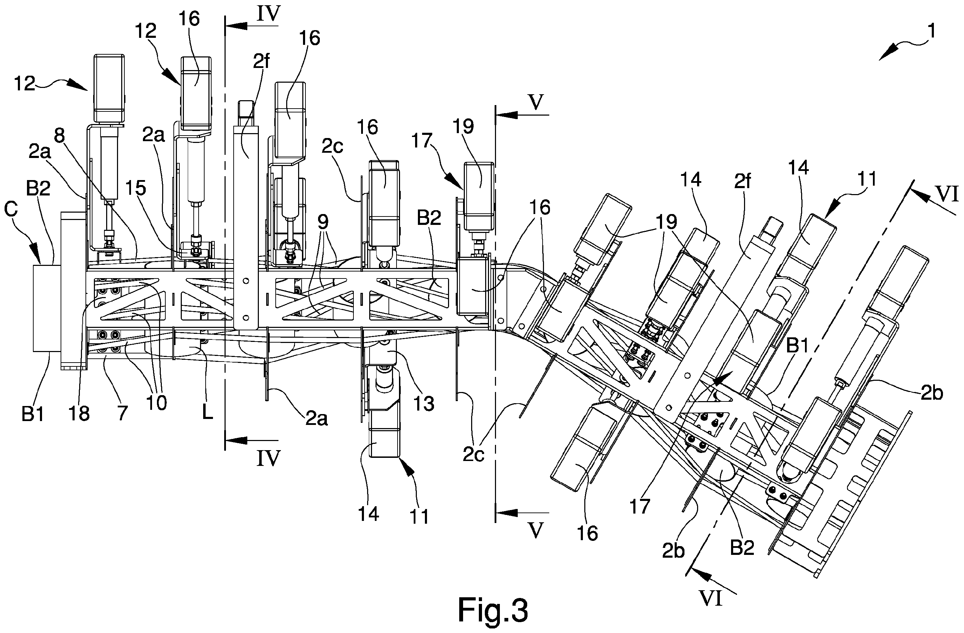

Figure 3 is a side elevation view, on an enlarged scale, of the device according to the invention;
Figure 4 is a sectional view along the plane IV-IV of Figure 3;
Figure 5 is a sectional view along the plane V-V of Figure 3;
Figure 6 is a sectional view along the plane VI-VI of Figure 3;
Figure 7 is an axonometric view of a detail of the device according to the invention;
Figure 8 is an axonometric view of another detail of the device according to the invention.

### Embodiments of the Invention

With particular reference to these illustrations, globally indicated with reference numeral 1 is a device for overturning containers along movement lines, particularly for cans.

The device 1 comprises at least a base frame 2a, 2b, 2c, 2f associable along a movement line 3, 4 of a succession of containers C which have two opposing bases B1, B2 and a lateral surface L.

In the embodiment illustrated in the figures, the containers C consist of traditional cans having a first closed base B1, and a second open circular base B2, and a lateral surface L with cylindrical shape.

The distance between the bases B1, B2 defines the height of the cans C while the dimension of the lateral surface L defines the width thereof.

It cannot however be ruled out that the device 1 may also be used to overturn containers C of different type and shape.

The movement line 3, 4 along which the device 1 is arranged consists, e.g., in a motorized inlet line 3 for the feeding of the cans C, which is substantially horizontal and located upstream of the device 1, and in an outlet line 4, which is substantially oblique and located downstream of the device 1, consisting of a rinsing machine.

In this regard, it is emphasized that in the present discussion the terms "upstream" and "downstream" are used with reference to the direction of normal advancement of the cans C.

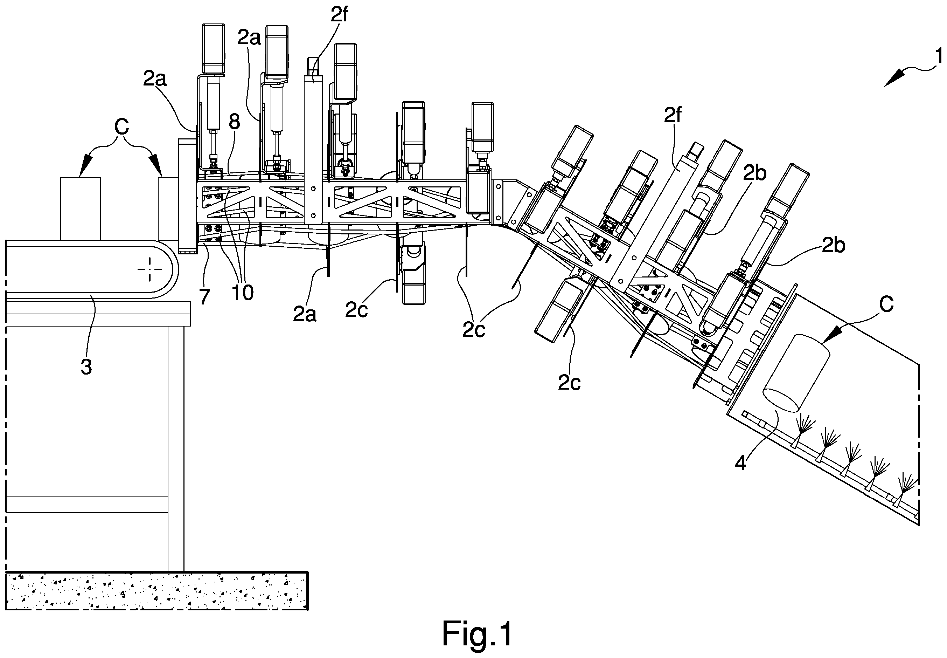

Alternative embodiments cannot however be ruled out in which the device 1 is applied along movement lines 3, 4 with different shapes and dimensions compared to the motorized lines shown in Figure 1.

According to the invention, the base frame 2a, 2b, 2c, 2f comprises a plurality of blocks 2a, 2b, 2c associated in succession with each other and comprising at least an inlet block 2a, for feeding the containers C, at least an outlet block 2b for moving the containers C away, and at least an intermediate block 2c for the connection of the inlet block 2a and of the outlet block 2b; preferably there is a plurality of intermediate blocks 2c.

In particular, the succession of the blocks 2a, 2b, 2c is arranged at least partly substantially inclined downwards, the advancement of the containers C along the inclined blocks taking place by gravity.

The blocks 2a, 2b, 2c are substantially annular shaped, i.e. are provided with the same number of central openings 5 through which the containers C pass.

Each block 2a, 2b, 2c, relative to the previous one, is rotated around the direction of advancement of the cans C by a predefined offset angle.

Advantageously, in order to facilitate the installation and removal operations of the device for overturning containers C by the entrusted technicians, the base frame 2a, 2b, 2c, 2f comprises at least one grip element 2f, e.g. of the type of a handle or the like.

Inside the central openings 5 is supported a plurality of guide segments 7, 8, 9, 10 associated with the base frame 2a, 2b, 2c, 2f.

Crosswise to the direction of advancement of the containers C the guide segments 7, 8, 9, 10 are arranged at a mutual distance adapted to allow the transit substantially to measure of only one of the containers C at a time and in the longitudinal direction they are shaped to define an advancement path of the containers C which is shaped at least partially in a spiral pattern.

In more detail, the guide segments 7, 8, 9, 10 consist of an elongated rod made of a substantially flexible material and are divided into:
- at least a first segment 7 and at least a second segment 8 adapted to guide the opposing bases B1, B2 of the containers C, respectively and
- at least a third segment 9 and at least a fourth segment 10 adapted to guide the lateral surface L on opposite sides of the containers C.

The device 1 preferably comprises only one first segment 7 and only one second segment 8, adapted to perform the function of a stop to the first base B1 and to the second base B2 respectively, and a plurality of third segments 9 and of fourth segments 10, adapted to perform the function of a stop for the lateral surface L.

In this regard, it is emphasized that the containers C come to the device 1 arranged resting on the first base B1 (with the axis of symmetry of the containers C arranged substantially vertical) as they come out of the device 1, according to the figures, overturned by about 165° (i.e. with the axis of symmetry of the containers C inclined by about 15° with respect to the vertical and resting on the second base B2).

Alternative embodiments of the device 1 are however possible wherein the overturning of the containers C is less, e.g. equal to 90° (with the exiting cans C having the axis of symmetry arranged substantially horizontal) or greater, e.g. equal to 180° (full overturning of the can C).

In more detail, at the inlet block 2a, the first segment 7 is arranged substantially under the second segment 8 to perform the function of a support for the first base B1 of the cans C coming from the motorized inlet line 3.

At the outlet block 2b, on the other hand, the first segment 7 is arranged substantially above the second segment 8, which performs the function of a support for the second base B2 of the exiting cans C.

Similarly, the third segments 9 and the fourth segments 10, at the inlet block 2a, are arranged substantially overturned with respect to their same position reached at the outlet block 2b.

However, during the transit from the inlet block 2a to the outlet block 2b, the guide segments 7, 8, 9, 10 are screwed on themselves to form a guiding spiral for the containers C.

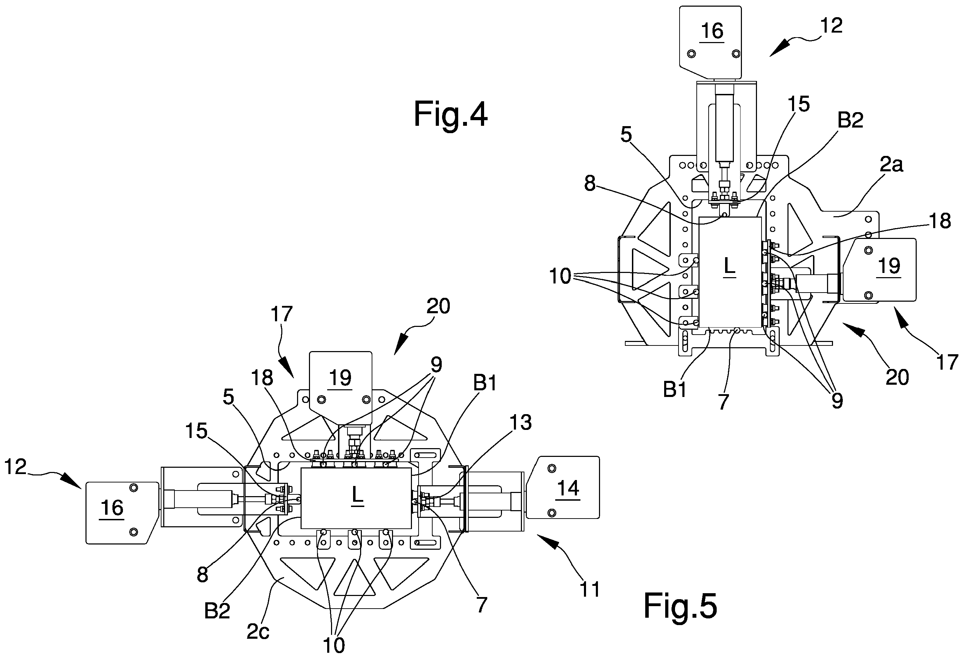

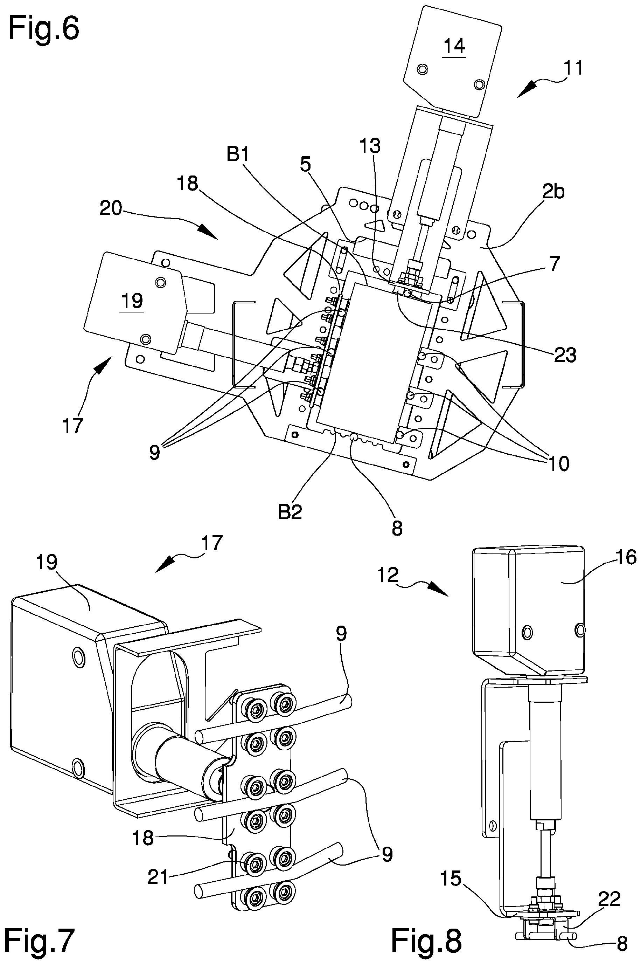

This aspect is particularly evident by looking at the reciprocal position of the guide segments 7, 8, 9, 10 illustrated in Figures 4, 5 and 6 in accordance with the travel direction of the movement line of the can C.

Conveniently, the device 1 is provided with first adjustment means 11, 12 adapted to adjust the mutual distance between the first segment 7 and the second segment 8 depending on the height of the cans C.

According to the invention, the first segment 7 is associated with the inlet block 2a in a substantially fixed position and is associated with the intermediate blocks 2c and with the outlet block 2b in a substantially movable manner, the first adjustment means 11, 12 comprising a first movement system 11 for the displacing of the first segment 7 at the intermediate blocks 2c and at the outlet block 2b.

To this purpose it is emphasized that the first movement system 11 comprises a series of first movable brackets 13, one for each intermediate block 2c and for the outlet block 2b and supporting the first segment 7.

Furthermore, such first movement system 11 comprises a series of first actuators 14, one for each intermediate block 2c and outlet block 2b, and adapted to actuate the first movable brackets 13 close to and away from the second segment 8.

According to the invention, the second segment 8 is associated with the outlet block 2b in a substantially fixed position and is associated with the intermediate blocks 2c and with the inlet block 2a in a substantially movable manner, the first adjustment means 11, 12 comprising a second movement system 12 of the second segment 8 at the intermediate block 2c and at the inlet block 2a.

The second movement system 12 comprises a series of second movable brackets 15, one for each intermediate block 2c and inlet block 2a and supporting the second segment 8.

Furthermore, the second movement system 12 comprises a series of second actuators 16, one for each intermediate block 2c and inlet block 2a, and adapted to actuate the second movable brackets 15 close to and away from the first segment 7.

According to the invention, the third segments 9 are associated with the blocks 2a, 2b, 2c in a substantially movable position, the second adjustment means 20 comprising at least a third movement system 17 of the third segments 9 at the blocks 2a, 2b, 2c.

The third movement system 17 comprises a series of third movable brackets 18, one for each of the blocks 2a, 2b, 2c and supporting the third segment 9. Furthermore, the third movement system 17 comprises a series of third actuators 19, one for each of the blocks 2a, 2b, 2c and adapted to actuate the third movable brackets 18 close to and away from the fourth segment 10. Finally, the fourth segments 10 are associated with the blocks 2a, 2b, 2c in a substantially fixed position.

The first actuators 14, the second actuators 16 and the third actuators 19 are all electronically connected independently the one from the other to a management and control unit, not shown in the figures, and are controllable by an operator by means of an electric panel.

Through the management and control unit, the first actuators 14 and the second actuators 16 are synchronized so that each adjusting operation of the first segment 7 corresponds to an equal adjusting operation of the second segment 8 depending on the height of the cans C.

In particular, the stroke of each of the first actuators 14 and of the second actuators 16 is substantially progressive in the same direction as the direction of advancement of the cans C.

More in detail, for the first segment 7, the stroke of the first actuators 14 is minimum at the inlet block 2a and maximum at the outlet block 2b. Conversely, for the second segment 8, the stroke of the second actuators 16 is maximum at the inlet block 2a and minimum at the outlet block 2b.

Through the management and control unit, the third actuators 19 are also actuated to produce an identical movement stroke of the third segments 9 on all the blocks 2a, 2b, 2c depending on the width of the cans C.

Advantageously, the first segment 7, the third segment 9 and the fourth segment 10 are made of a plastic material.

For maintaining the first segment 7 in position on the first movable brackets 13 during the movement of the first actuators 14, the first movement system 11 comprises a plurality of first roller elements 23, mounted on each first movable bracket 13 and arranged on opposite sides of the first segment 7.

Such first roller elements 23 are made e.g. of a plastic material, in accordance with the material characteristics of the first segment 7.

Similarly, also for maintaining the third segments 9 in position on the third movable brackets 18 the third movement system 17 comprises a plurality of third roller elements 21, mounted on each third movable bracket 18 and arranged on opposite sides of the third segment 9.

The third roller elements 21, like the first roller elements 23, are made e.g. of a plastic material, in accordance with the material characteristics of the third segments 9.

The second segment 8, on the other hand, is made of a metallic material.

The choice of the metallic material, preferably steel, anyway provided with flexibility, for the realization of the second segment 8 arises essentially from the need to reduce the wear of the segment itself as a consequence of the continuous contact by sliding with the typically sharp edge of the second base B2 during the overturning of the can C.

This technical solution also prevents the possibility that the second segment 8 breaks cleanly during the operation of the device (possibly causing the immediate stoppage of the entire movement system of the cans C).

In order to maintain the second segment 8 in the correct position, the second movement system 12 comprises, for each second actuator 16 and second movable bracket 15, a housing seat 22 (also made of a metallic material, preferably steel).

The operation of the device 1 is as follows.

Depending on the height of the cans C to overturn, the first actuators 14 and the second actuators 16 are commanded to displace the first segment 7 and the second segment 8 respectively; depending on the width of the cans C, however, the third actuators 19 are commanded to displace the third segments 9 with respect to the fourth segments 10, which remain substantially fixed.

At the inlet block 2a, the position of the first segment 7 is always fixed and is such that it can be coupled to the motorized inlet line 3 irrespective of the height of the cans C.

Similarly, at the outlet block 2b, the position of the second segment 8 is fixed and is such that it can be coupled to the outlet line 4 irrespective of the height of the cans C.

Depending on the height of the cans C, the first adjustment means 11, 12 cause the displacement of the first segment 7 in a progressive manner as one moves from the inlet to the outlet of the device 1 and the displacement of the second segment 8 in a progressive manner as one moves from the outlet to the inlet of the device 1.

At the same time, depending on the lateral dimensions of the containers C, the second adjustment means 20 cause the displacement of the third segment 9 close to or away from the fourth segment 10.

## Claims

1. A device (1) for overturning containers (C) along movement lines (3, 4), particularly for cans, comprising:
- at least a base frame (2a, 2b, 2c, 2f) associable along a movement line (3, 4) of a succession of containers (C) which have two opposing bases (B1, B2) and a lateral surface (L), and
- a plurality of guide segments (7, 8, 9, 10) associated with said base frame (2a, 2b, 2c, 2f), transversally arranged to allow the transit substantially to measure of only one of said containers (C) and longitudinally shaped to define an advancement path of said containers (C) at least partially in a spiral pattern, said guide segments (7, 8, 9, 10) comprising:
- at least a first segment (7) and at least a second segment (8) adapted to guide said opposing bases (B1, B2) of the containers (C), respectively;
- at least a third segment (9) and at least a fourth segment (10) adapted to guide said lateral surface (L) on opposite sides of said containers (C);
- first adjustment means (11, 12) adapted to adjust the mutual distance between said first segment (7) and said second segment (8) depending on the height of said containers (C);
- second adjustment means (20) adapted to adjust the mutual distance between said third segment (9) and said fourth segment (10) depending on the lateral overall dimensions of said containers (C);
wherein said base frame (2a, 2b, 2c, 2f) comprises a plurality of blocks (2a, 2b, 2c) associated in succession with each other and comprising at least an inlet block (2a) of the containers (C), at least an outlet block (2b) of the containers (C) and at least an intermediate block (2c) for the connection of said inlet block (2a) and of said outlet block (2b);
**characterized in that** said first segment (7) is associated with said inlet block (2a) in a substantially fixed position and is associated with said intermediate block (2c) and with said outlet block (2b) in a substantially movable manner and said first adjustment means (11, 12) comprises at least a first movement system (11) of said first segment (7) at said intermediate block (2c) and at said outlet block (2b), said first movement system (11) comprising:
- a series of first movable brackets (13), one for each of said intermediate block (2c) and outlet block (2b) and supporting said first segment (7), and
- a series of first actuators (14), one for each of said intermediate block (2c) and outlet block (2b) and adapted to actuate said first movable brackets (13) close to and away from said second segment (8);
wherein second segment (8) is associated with said outlet block (2b) in a substantially fixed position and is associated with said intermediate block (2c) and with said inlet block (2a) in a substantially movable manner and said first adjustment means (11, 12) comprises at least a second movement system (12) of said second segment (8) at said intermediate block (2c) and at said inlet block (2a), said second movement system (12) comprising:
- a series of second movable brackets (15), one for each of said intermediate block (2c) and inlet block (2a) and supporting said second segment (8), and
- a series of second actuators (16), one for each of said intermediate block (2c) and inlet block (2a) and adapted to actuate said second movable brackets (15) close to and away from said first segment (7);
wherein said third segment (9) is associated with said blocks (2a, 2b, 2c) in a substantially movable position and said second adjustment means (20) comprise at least a third movement system (17) of said third segment (9) at said blocks (2a, 2b, 2c), said third movement system (17) comprising:
- a series of third movable brackets (18), one for each of said blocks (2a, 2b, 2c) and supporting said third segment (9), and
- a series of third actuators (19), one for each of said blocks (2a, 2b, 2c) and adapted to actuate said third movable brackets (18) close to and away from said fourth segment (10).

2. The device (1) according to claim 1, **characterized by** the fact that the succession of said blocks (2a, 2b, 2c) is arranged at least partly substantially inclined downwards, the advancement of said containers (C) along said inclined blocks taking place by gravity.

3. The device (1) according to one or more of the preceding claims, **characterized by** the fact that said blocks (2a, 2b, 2c) are substantially annular shaped and are adapted to internally support said guide segments (7, 8, 9, 10).

4. The device (1) according to one or more of the preceding claims, **characterized by** the fact that said first segment (7), said second segment (8), said third segment (9) and said fourth segment (10) are substantially flexible.

5. The device (1) according to one or more of the preceding claims, **characterized by** the fact that said first segment (7), said third segment (9) and said fourth segment (10) are made of plastic material and said second segment (8) is made of metallic material.

6. The device (1) according to one or more of the preceding claims, **characterized by** the fact that at said inlet block (2a), said first segment (7) is arranged substantially under said second segment (8) and at said outlet block (2b), said first segment (7) is arranged substantially above said second segment (8).

7. The device (1) according to one or more of the preceding claims, **characterized by** the fact that said fourth segment (10) is associated with said inlet block (2a), intermediate block (2c) and outlet block (2b) in a substantially fixed position.

## Patentansprüche

1. Vorrichtung (1) zum Umdrehen von Behältern (C) entlang von Bewegungslinien (3, 4), insbesondere für Dosen, umfassend:
- mindestens einen Grundrahmen (2a, 2b, 2c, 2f), der entlang einer Bewegungslinie (3, 4) einer Folge von Behältern (C), die zwei gegenüberliegende Böden (B1, B2) und eine Seitenfläche (L) aufweisen, zugeordnet werden kann, und
- eine Vielzahl von Führungssegmenten (7, 8, 9, 10), die dem Grundrahmen (2a, 2b, 2c, 2f) zugeordnet sind, die quer angeordnet sind, um den Durchgang von nur einem der Behälter (C) im Wesentlichen nach Maß zu ermöglichen, und die in Längsrichtung so geformt sind, dass sie einen Vorschubweg der Behälter (C) zumindest teilweise in einem spiralförmigen Muster definieren, wobei die Führungssegmente (7, 8, 9, 10) umfassen:
- mindestens ein erstes Segment (7) und mindestens ein zweites Segment (8), die ausgebildet sind, jeweils die gegenüberliegenden Böden (B1, B2) der Behälter (C) zu führen;
- mindestens ein drittes Segment (9) und mindestens ein viertes Segment (10), die ausgebildet sind, die Seitenfläche (L) auf gegenüberliegenden Seiten der Behälter (C) zu führen;
- erste Einstellmittel (11, 12), die ausgebildet sind, den gegenseitigen Abstand zwischen dem ersten Segment (7) und dem zweiten Segment (8) in Abhängigkeit von der Höhe der Behälter (C) einzustellen;
- zweite Einstellmittel (20), die ausgebildet sind, den gegenseitigen Abstand zwischen dem dritten Segment (9) und dem vierten Segment (10) in Abhängigkeit von den seitlichen Gesamtabmessungen der Behälter (C) einzustellen;
wobei der Grundrahmen (2a, 2b, 2c, 2f) eine Vielzahl von Blöcken (2a, 2b, 2c) umfasst, die aufeinanderfolgend einander zugeordnet sind und mindestens einen Einlassblock (2a) der Behälter (C), mindestens einen Auslassblock (2b) der Behälter (C) und mindestens einen Zwischenblock (2c) zur Verbindung des Einlassblocks (2a) und des Auslassblocks (2b) umfassen,
**dadurch gekennzeichnet, dass**
das erste Segment (7) dem Einlassblock (2a) in einer im Wesentlichen festen Position zugeordnet ist und dem Zwischenblock (2c) und dem Auslassblock (2b) in einer im Wesentlichen beweglichen Weise zugeordnet ist und die ersten Einstellmittel (11, 12) mindestens ein erstes Bewegungssystem (11) des ersten Segments (7) an dem Zwischenblock (2c) und an dem Auslassblock (2b) umfassen, wobei das erste Bewegungssystem (11) umfasst:
- eine Reihe von ersten beweglichen Halterungen (13), jeweils eine für den Zwischenblock (2c) und den Auslassblock (2b), die das erste Segment (7) tragen, und
- eine Reihe von ersten Stellgliedern (14), jeweils eines für den Zwischenblock (2c) und den Auslassblock (2b), die ausgebildet sind, die ersten beweglichen Halterungen (13) auf das zweite Segment (8) zu und von diesem weg zu betätigen; wobei das zweite Segment (8) dem Auslassblock (2b) in einer im Wesentlichen festen Position zugeordnet ist und dem Zwischenblock (2c) und dem Einlassblock (2a) in einer im Wesentlichen beweglichen Weise zugeordnet ist und die ersten Einstellmittel (11, 12) mindestens ein zweites Bewegungssystem (12) des zweiten Segments (8) an dem Zwischenblock (2c) und an dem Einlassblock (2a) umfassen, wobei das zweite Bewegungssystem (12) umfasst:
- eine Reihe von zweiten beweglichen Halterungen (15), jeweils eine für den Zwischenblock (2c) und den Einlassblock (2a), die das zweite Segment (8) tragen, und
- eine Reihe von zweiten Stellgliedern (16), jeweils eines für den Zwischenblock (2c) und den Einlassblock (2a), die ausgebildet sind, die zweiten beweglichen Halterungen (15) auf das erste Segment (7) zu und von diesem weg zu betätigen; wobei das dritte Segment (9) den Blöcken (2a, 2b, 2c) in einer im Wesentlichen beweglichen Position zugeordnet ist und die zweiten Einstellmittel (20) mindestens ein drittes Bewegungssystem (17) des dritten Segments (9) an den Blöcken (2a, 2b, 2c) umfassen, wobei das dritte Bewegungssystem (17) umfasst:
- eine Reihe von dritten beweglichen Halterungen (18), eine für jeden der Blöcke (2a, 2b, 2c), die das dritte Segment (9) tragen, und
- eine Reihe von dritten Stellgliedern (19), jeweils eines für jeden der Blöcke (2a, 2b, 2c), die ausgebildet sind, die dritten beweglichen Halterungen (18) auf das vierte Segment (10) zu und von diesem weg zu betätigen.

2. Vorrichtung (1) nach Anspruch 1, **dadurch gekennzeichnet, dass** die Abfolge der Blöcke (2a, 2b, 2c) zumindest teilweise im Wesentlichen nach unten geneigt angeordnet ist, wobei der Vorschub der Behälter (C) entlang der geneigten Blöcke durch Schwerkraft erfolgt.

3. Vorrichtung (1) nach einem oder mehreren der vorhergehenden Ansprüche, **dadurch gekennzeichnet, dass** die Blöcke (2a, 2b, 2c) im Wesentlichen ringförmig sind und ausgebildet sind, die Führungssegmente (7, 8, 9, 10) innen zu tragen.

4. Vorrichtung (1) nach einem oder mehreren der vorhergehenden Ansprüche, **dadurch gekennzeichnet, dass** das erste Segment (7), das zweite Segment (8), das dritte Segment (9) und das vierte Segment (10) im Wesentlichen flexibel sind.

5. Vorrichtung (1) nach einem oder mehreren der vorhergehenden Ansprüche, **dadurch gekennzeichnet, dass** das erste Segment (7), das dritte Segment (9) und das vierte Segment (10) aus Kunststoffmaterial hergestellt sind und das zweite Segment (8) aus metallischem Material hergestellt ist.

6. Vorrichtung (1) nach einem oder mehreren der vorhergehenden Ansprüche, **dadurch gekennzeichnet, dass** an dem Einlassblock (2a) das erste Segment (7) im Wesentlichen unter dem zweiten Segment (8) und an dem Auslassblock (2b) das erste Segment (7) im Wesentlichen über dem zweiten Segment (8) angeordnet ist.

7. Vorrichtung (1) nach einem oder mehreren der vorhergehenden Ansprüche, **dadurch gekennzeichnet, dass** das vierte Segment (10) dem Einlassblock (2a), dem Zwischenblock (2c) und dem Auslassblock (2b) in einer im Wesentlichen festen Position zugeordnet ist.

## Revendications

1. Dispositif (1) permettant de retourner des contenants (C) le long de lignes de déplacement (3, 4), en particulier pour des cannettes, comprenant :
- au moins un cadre de base (2a, 2b, 2c, 2f) pouvant être associé le long d'une ligne de déplacement (3, 4) d'une succession de contenants (C) qui ont deux bases (B1, B2) opposées et une surface latérale (L), et
- une pluralité de segments guides (7, 8, 9, 10) associés audit cadre de base (2a, 2b, 2c, 2f), agencés transversalement pour permettre le transit sensiblement pour mesurer d'un seul desdits contenants (C) et formés longitudinalement pour définir un chemin d'avancée desdits contenants (C) au moins partiellement en un motif en spirale, lesdits segments guides (7, 8, 9, 10) comprenant :
- au moins un premier segment (7) et au moins un deuxième segment (8) adaptés pour guider lesdites bases (B1, B2) opposées des contenants (C), respectivement ;
- au moins un troisième segment (9) et au moins un quatrième segment (10) adaptés pour guider ladite surface latérale (L) sur des côtés opposés desdits contenants (C) ;
- un premier moyen de réglage (11, 12) adapté pour régler la distance mutuelle entre ledit premier segment (7) et ledit deuxième segment (8) en fonction de la hauteur desdits contenants (C) ;
- des seconds moyens de réglage (20) adaptés pour régler la distance mutuelle entre ledit troisième segment (9) et ledit quatrième segment (10) en fonction des dimensions globales latérales desdits contenants (C) ;
dans lequel ledit cadre de base (2a, 2b, 2c, 2f) comprend une pluralité de blocs (2a, 2b, 2c) associés en succession les uns aux autres et comprenant au moins un bloc d'entrée (2a) des contenants (C), au moins un bloc de sortie (2b) des contenants (C) et au moins un bloc intermédiaire (2c) pour la liaison dudit bloc d'entrée (2a) et dudit bloc de sortie (2b) ;
**caractérisé en ce que**
ledit premier segment (7) est associé audit bloc d'entrée (2a) dans une position sensiblement fixe et est associé audit bloc intermédiaire (2c) et audit bloc de sortie (2b) d'une manière sensiblement mobile et ledit premier moyen de réglage (11, 12) comprend au moins un premier système de déplacement (11) dudit premier segment (7) au niveau dudit bloc intermédiaire (2c) et au niveau dudit bloc de sortie (2b), ledit premier système de déplacement (11) comprenant :
- une série de premiers soutiens mobiles (13), un pour chacun desdits bloc intermédiaire (2c) et bloc de sortie (2b) et supportant ledit premier segment (7), et
- une série de premiers actionneurs (14), un pour chacun desdits bloc intermédiaire (2c) et bloc de sortie (2b) et adaptés pour actionner lesdits premiers soutiens mobiles (13) près et loin dudit deuxième segment (8) ;
dans lequel ledit deuxième segment (8) est associé audit bloc de sortie (2b) dans une position sensiblement fixe et est associé audit bloc intermédiaire (2c) et audit bloc d'entrée (2a) d'une manière sensiblement mobile et ledit premier moyen de réglage (11, 12) comprend au moins un second système de déplacement (12) dudit deuxième segment (8) au niveau dudit bloc intermédiaire (2c) et au niveau dudit bloc d'entrée (2a), ledit second système de déplacement (12) comprenant :
- une série de deuxièmes soutiens mobiles (15), un pour chacun desdits bloc intermédiaire (2c) et bloc d'entrée (2a) et supportant ledit deuxième segment (8), et
- une série de deuxièmes actionneurs (16), un pour chacun desdits bloc intermédiaire (2c) et bloc d'entrée (2a) et adaptés pour actionner lesdits deuxièmes soutiens mobiles (15) près et loin dudit premier segment (7) ;
dans lequel ledit troisième segment (9) est associé auxdits blocs (2a, 2b, 2c) dans une position sensiblement mobile et lesdits seconds moyens de réglage (20) comprennent au moins un troisième système de déplacement (17) dudit troisième segment (9) au niveau desdits blocs (2a, 2b, 2c), ledit troisième système de déplacement (17) comprenant :
- une série de troisièmes soutiens mobiles (18), un pour chacun desdits blocs (2a, 2b, 2c) et supportant ledit troisième segment (9), et
- une série de troisièmes actionneurs (19), un pour chacun desdits blocs (2a, 2b, 2c) et adaptés pour actionner lesdits troisièmes soutiens mobiles (18) près et loin dudit quatrième segment (10).

2. Dispositif (1) selon la revendication 1, **caractérisé par le fait que** la succession desdits blocs (2a, 2b, 2c) est agencée au moins partiellement sensiblement inclinée vers le bas, l'avancée desdits contenants (C) le long desdits blocs inclinés ayant lieu par gravité.

3. Dispositif (1) selon une ou plusieurs des revendications précédentes, **caractérisé par le fait que** lesdits blocs (2a, 2b, 2c) sont de forme sensiblement annulaire et sont adaptés pour supporter intérieurement lesdits segments guides (7, 8, 9, 10).

4. Dispositif (1) selon une ou plusieurs des revendications précédentes, **caractérisé par le fait que** ledit premier segment (7), ledit deuxième segment (8), ledit troisième segment (9) et ledit quatrième segment (10) sont sensiblement flexibles.

5. Dispositif (1) selon une ou plusieurs des revendications précédentes, **caractérisé par le fait que** ledit premier segment (7), ledit troisième segment (9) et ledit quatrième segment (10) sont faits de matière plastique et ledit deuxième segment (8) est fait de matière métallique.

6. Dispositif (1) selon une ou plusieurs des revendications précédentes, **caractérisé par le fait qu'**au niveau dudit bloc d'entrée (2a), ledit premier segment (7) est agencé sensiblement en dessous dudit deuxième segment (8) et au niveau dudit bloc de sortie (2b), ledit premier segment (7) est agencé sensiblement au-dessus dudit deuxième segment (8).

7. Dispositif (1) selon une ou plusieurs des revendications précédentes, **caractérisé par le fait que** ledit quatrième segment (10) est associé auxdits bloc d'entrée (2a), bloc intermédiaire (2c) et bloc de sortie (2b) dans une position sensiblement fixe.
